# EUROPEAN PATENT SPECIFICATION

(11) **EP 2 493 249 B1**
(45) Date of publication and mention of the grant of the patent: **11.11.2015**
(21) Application number: 10849303.2
(22) Date of filing: 16.11.2010
(51) Int. Cl.: G06F 13/38, H04W 52/02

(54) **METHOD AND DEVICE FOR DYNAMICALLY CHANGING PORT SERVICE CONFIGURATION BETWEEN APPLICATION PROCESSOR AND COMMUNICATION MODULE**
VERFAHREN UND VORRICHTUNG ZUR DYNAMISCHEN ÄNDERUNG EINER ANSCHLUSSDIENSTKONFIGURATION ZWISCHEN EINEM ANWENDUNGSPROZESSOR UND EINEM KOMMUNIKATIONSMODUL
PROCÉDÉ ET DISPOSITIF PERMETTANT DE MODIFIER DYNAMIQUEMENT LA CONFIGURATION DE L'UTILISATION DES PORTS ENTRE UN PROCESSEUR D'APPLICATION ET UN MODULE DE COMMUNICATION

(30) Priority: 09.04.2010 CN 201010143088
(43) Date of publication of application: 29.08.2012
(73) Proprietor: ZTE Corporation, Shenzhen, Guangdong 518057 (CN)
(72) Inventor: ZHOU, Xingwei, Shenzhen Guangdong 518057 (CN)
(74) Representative: Price, Nigel John King
(86) International application number: PCT/CN2010/078796
(87) International publication number: WO 2011/124067

(56) References cited:
- WO-A1-2008/093963
- WO-A2-2009/091193
- CN-A- 1 610 893
- CN-A- 101 577 986
- CN-A- 101 751 361
- US-B1- 6 618 776

## Description

### Technical Field

The present invention relates to the field of wireless communication, and in particular, to a method and apparatus for dynamically switching port service configurations between an application processor (AP) and a communication module.

### Background of the Related Art

Serial communication interfaces can realize strong functions through simple and convenient communication signal lines, have a wide range of transmission speed, and is one of most widely used communication interfaces in recent years. Serial ports contained in a communication module mainly include universal asynchronous receiver/transmitters (UART), serial peripheral interfaces (SPI), universal serial buses (USB), etc., and can be used to communicate with an AP or a PC. During transmission using the serial ports, there is difference in power consumption of different serial ports. Under the same transmission rate, the power consumption of the UART is less than that of the USB.

At present, there are many methods for a communication module to interact with a AP, such as, double port random access memory (RAM), USB, UART, USB + general purpose input/output (GPIO), UART + GPIO, USB + UART + GPIO, etc. These schemes fix a particular service to a particular port, thus their interaction modes are comparatively simplex. Especially, when there are two or more physical interfaces between the communication module and the AP and there is great difference in power consumption of the interfaces, then a particular service (which mainly refers to a modem) is switched dynamically between the two interfaces according to a certain strategy, in order to achieve the goal of reducing the power consumption.

In practical applications, in the case of services, such as online playing of movie TV or music and downloading of files, or when the requirement for the transmission rate is high, an interface such as a USB having fast transmission speed and higher power consumption can be used as a modem port; when data flow is small (browsing web pages and checking emails or net speed is limited by the network, etc.) and high rate is not required, an interface such as a UART having slower transmission rate and less electricity consumption can be used. A best way to combine advantages of the USB interface with those of the UART interface is to switch ports of the modem at the appropriate time. In addition, a user may switch the ports actively for some reason, for example, the UART is used instead of the USB to transmit data when electric quantity of a system is insufficient or transmission data quantity is small, and a high speed interface such as the USB is used as the modem when data transmission quantity is large, for example, when files are downloaded or online video is played.

In sum, the port service configurations adopted by the current communication modules are fixed, that is, a particular service is fixed to a certain port, such as dual port RAM, USB and UART, and the port service configurations cannot be changed dynamically according to actual situations of data flow or net speed or electric quantity, therefore the power consumption of the module cannot be reduced.

An example of prior art method is described in WO 2008/093963 A1 (MTEKVISION CO LTD [KR]; CHOI KYU-PAK [KR]; MOON SANG-AH [KR]) 7 August 2008, which discloses an apparatus suitable for dynamical port service configurations between an application processor and a USB controller.

### Content of the Invention

An object of the present invention is to provide a method and apparatus for dynamically switching port service configurations between an AP and a communication module so as to implement dynamic switching of the port service configurations between the AP and the communication module according to data flow or electric quantity or data transmission rate, to reduce power consumption of the communication module as defined in the attached independent claims.

According to the first aspect of the present invention, there is provided a method for dynamically switching port service configurations between an application processor (AP) and a communication module comprises the following steps of:
A) after normal initialization, the AP and the communication module respectively performing port service configurations in an initialization phase;
B) after the port service configurations in the initialization phase are completed, starting monitoring of data flow between the AP and the communication module; and
C) the AP and the communication module respectively switching their respective current port service configurations to a port service configuration corresponding to the monitored data flow according to a result of the monitoring of the data flow.

The method in accordance with the present invention further comprises the following steps of:
D1) after the port service configurations in the initialization phase are completed, the communication module monitoring its electric quantity or data transmission rate;
D2) when monitoring that the electric quantity or the data transmission rate is lower than a preset value, the communication module switching its port service configuration to a port service configuration with low power consumption, and notifying the AP to switch its port service configuration to the port service configuration with low power consumption.

The port service configuration means that a service is bound to a port; the switching of the port service configurations means that binding of the current service to the current port is changed to binding of the current service to another port.

The starting monitoring of the data flow between the AP and the communication module in step B) comprises the AP monitoring the data flow between the AP and the communication module by counting the data flow in a period of time.

The step C) specifically comprises: the AP comparing a value of the counted data flow with a threshold value, and when the value of the counted data flow is less than the threshold value, activating the AP and the communication module to bind their respective modems to their respective UART ports after relieving binding of their respective modem services to their respective USB ports respectively.

After the communication module and the AP bind the modem services to the UART ports, the method further comprises: the communication module and the AP shutting down their respective USB ports respectively.

The port service configuration in step D2) means that the modem services are bound to the USB ports; and the port service configuration with low power consumption means that the modem services are bound to the UART ports.

The step A) specifically comprises: after normal initialization of the AP and the communication module, when the AP detects that a USB device is connected, the AP inquiring a port setting scheme to be performed from the communication module through a UART port;
the communication module responding to the inquiry, notifying the AP of the port setting scheme to be performed, and performing the port service configuration in the initialization phase of the communication module according to the port setting scheme to be performed; and
the AP performing the port service configuration in the initialization phase of the AP according to the port setting scheme to be performed, which is notified by the communication module.

According to the second aspect of the present invention, there is provided an apparatus for dynamically switching port service configurations between an application processor (AP) and a communication module comprises:
an initialization port service configuration unit configured to perform the port service configurations in an initialization phase of the AP and the communication module after normal initialization of the AP and the communication module;
a data flow monitoring unit configured to monitor data flow between the AP and the communication module after the port service configurations in the initialization phase are completed; and
a port service configuration switching unit configured to switch the current port service configurations of the AP and the communication module to a port service configuration corresponding to the monitored data flow according to a result of the monitoring.

In addition, the apparatus in accordance with the present invention further comprises: an electric quantity/data transmission rate monitoring unit configured to monitor electric quantity or data transmission rate of the communication module after the port service configurations in the initialization phase are completed, and switch the port service configurations of the AP and the communication module to a port service configuration with low power consumption respectively when monitoring that the electric quantity or the data transmission rate is lower than a preset value.

In the method and apparatus described above, the port service configuration means that a service is bound to a port; the switching of the port service configurations means that binding of the current service to the current port is changed to binding of the current service to another port.

Compared with the prior art, the method in accordance with the present invention has the following technological effects:
1) A service is configured to a low power consumption port dynamically according to counted data flow between the AP and the communication module, thereby reducing power consumption efficiently and extending standby working time while supporting the real-time requirement of communication in the system.
2) The service corresponding to the port is configured flexibly according to the electric quantity or the transmission rate of the data quantity of Internet service.

### Brief Description of Drawings

FIG. 1 is a schematic diagram of an example of switching of port service configurations between an AP and a communication module in accordance with the present invention;
FIG. 2 is a block diagram of an apparatus for dynamically switching port service configurations between an AP and a communication module in accordance with the present invention;
FIG. 3 is a flow chart of a method for dynamically switching port service configurations between an AP and a communication module in accordance with the present invention; and
FIG. 4 is a flow chart of a method for performing port service configurations upon startup in accordance with the present invention.

### Preferred Embodiments of the Present Invention

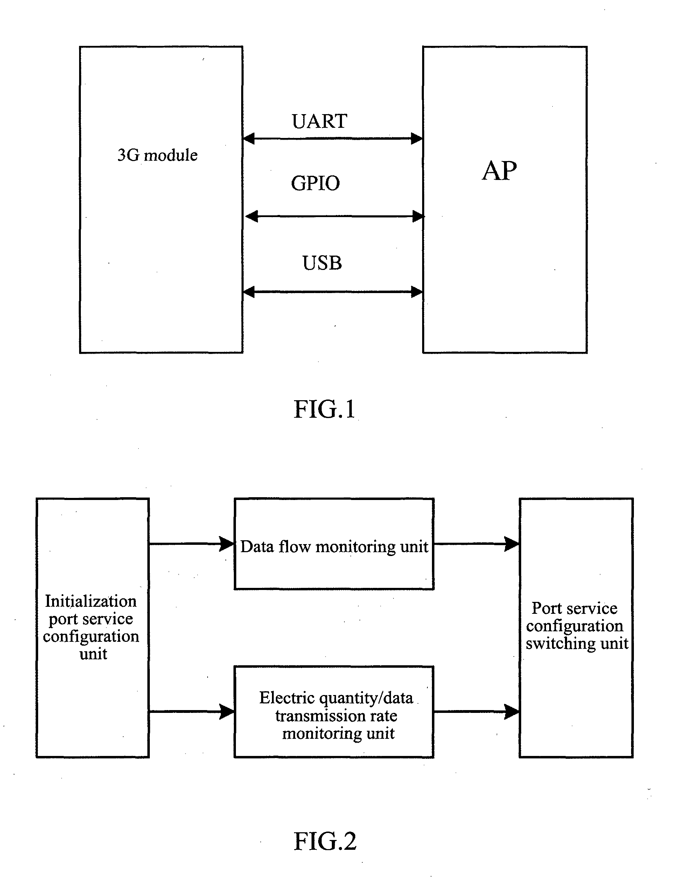

FIG. 1 shows an example of switching of port service configurations between an AP and a communication module (such as 3G module) in accordance with the present invention. In the example, a GPIO signal is used to configure a service corresponding to a UART or a USB.

It should be noted that the port service configuration herein means that a service is bound to a port, for example, a modem service is bound to a USB port, or a modem is bound to a UART port; and the switching of the port service configurations means that binding of the current service to the current port is changed to binding of the current service to another port, for example, in the case that the current service is a modem and the current port is a USB port and another port is a UART port, the switching of the port service configurations means that binding of the modem to the USB port is changed to binding of the modem to the UART port. It should be noted that the binding of the modem to the USB port is required to be relieved before the binding.

FIG. 2 shows an apparatus for dynamically switching port service configurations between an application processor (AP) and a communication module. The apparatus in accordance with the present invention may be provided in the communication module and the AP respectively, in order to perform dynamic switching of the port service configurations respectively.

As shown in FIG. 2, the apparatus for dynamically switching the port service configurations in accordance with the present invention comprises an initialization port service configuration unit, a data flow monitoring unit and a port service configuration switching unit.

The initialization port service configuration unit is configured to perform the port service configurations in an initialization phase of the AP and the communication module after normal initialization of the AP and the communication module. In general, a modem is bound to a USB port.

The data flow monitoring unit is configured to monitor data flow between the AP and the communication module after the port service configurations in the initialization phase are completed. As shown in FIG. 2, the data flow monitoring unit connected to the initialization port service configuration unit starts monitoring of the data flow according to a port service configuration completion signal output by the initialization port service configuration unit.

The port service configuration switching unit is configured to switch the current port service configurations of the AP and the communication module to a port service configuration corresponding to the monitored data flow according to the result of the monitoring. For example, when it detected that the data flow is lower than a certain value, it binds the modem to a UATR port.

Referring to FIG. 2, the apparatus for dynamically switching port service configurations in accordance with the present invention further comprises an electric quantity/data transmission rate monitoring unit configured to monitor electric quantity or data transmission rate of the communication module after the port service configurations in the initialization phase are completed, and switch the port service configurations of the AP and the communication module to a port service configuration with low power consumption respectively when monitoring that the electric quantity or the data transmission rate is lower than a preset value. In general, the modem is bound to the UART port.

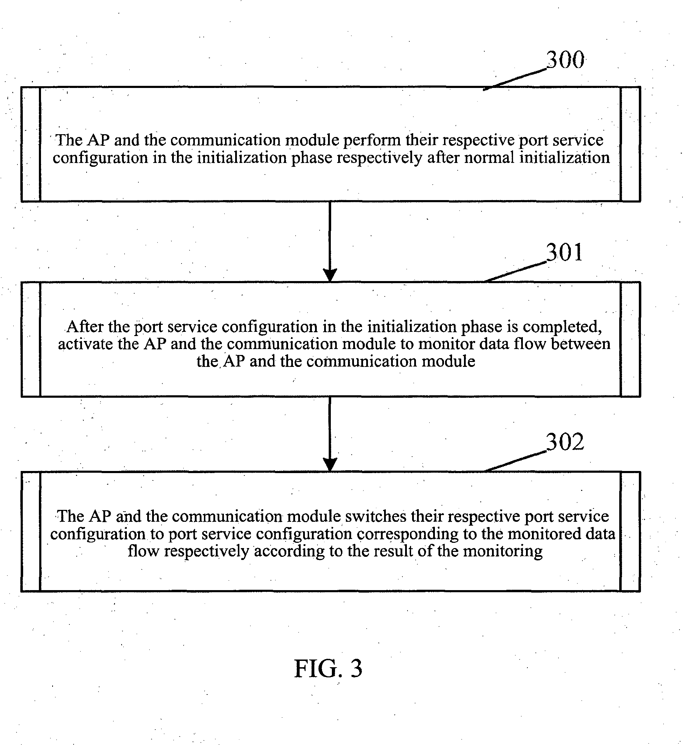

FIG. 3 shows a method for dynamically switching port service configurations between an AP and a communication module in accordance with the present invention. As shown in FIG. 3, the method comprises the following steps.

In step 300, the AP and the communication module perform their respective port service configurations in an initialization phase respectively after normal initialization.

In step 301, after the port service configurations in the initialization phase are completed, monitoring of data flow between the AP and the communication module is started.

In step 302, the AP and the communication module switch their respective current port service configurations to a port service configuration corresponding to the monitored data flow respectively according to the result of monitoring of the data flow.

In a specific example, the AP or the communication module monitors the data flow between the AP and the communication module by counting the data flow in a period of time. Then the AP or the communication module compares a value of the counted data flow with a threshold value, and when the value of the counted data flow is less than the threshold value, activates the AP and the communication module to bind their respective modems to their respective UART ports after relieving binding of their respective modem services to their respective USB ports respectively, in order to realize dynamic switching of the port service configurations.

Once the communication module and the AP bind the modem services to the UART ports, their respective USB ports will be shut down, in order to save electric energy. Hereafter, if the port service configurations in the initialization phrase are required to be recovered, recovery of the port service configurations can be controlled using a dormancy and wakeup signal (GPIO in FIG. 1).

The method for dynamically switching the port service configurations between the AP and the communication module in accordance with the present invention also comprises: after the port service configurations in the initialization phase are completed, the communication module monitoring electric quantity or data transmission rate of the communication module. For example, in the case of low data transmission rate, such as browsing web pages and checking emails, the data transmission rate can be monitored by monitoring events of browsing web pages and checking emails. When monitoring that the electric quantity or the data transmission rate is lower than a preset value, the communication module switches its port service configuration to a port service configuration with low power consumption, and notifies the AP to switch its port service configuration to the port service configuration with low power consumption. The port service configuration means that the modem service is bound to the USB port; and the port service configuration with low power consumption means that the modem service is bound to the UART port.

The communication module automatically switches the port service configuration according to the monitoring result of the electric quantity or the data transmission rate. In addition, the user can also switch the port service configuration actively according to the monitoring result of the electric quantity or the data transmission rate.

Furthermore, step 300 may comprises the following specifically.

After normal initialization of the AP and the communication module, the AP inquires a port setting scheme to be performed from the communication module through the UART port when the AP detects that a USB device is connected.

The communication module responds to the inquiry, notifies the AP of the port setting scheme to be performed, and performs the port service configuration in the initialization phase according to the port setting scheme to be performed.

The AP performing the port service configuration in the initialization phase of the AP according to the port setting scheme to be performed, which is notified by the communication module.

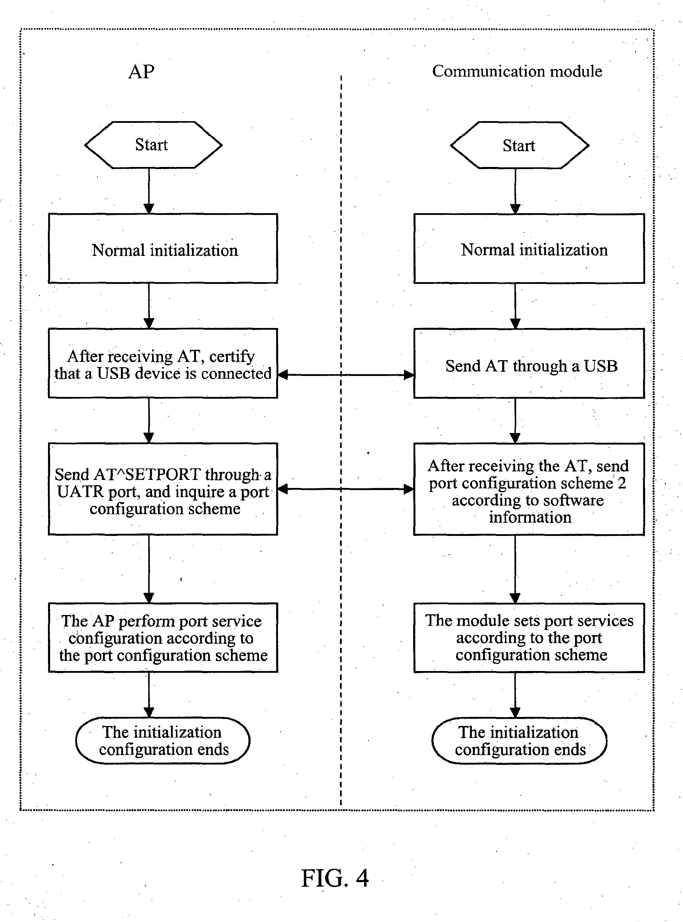

FIG. 4 shows a procedure in which an AP and a communication module perform port service configurations in an initialization phrase upon startup such that those skilled in the art can further understand specific implementation of step 300 in FIG. 3.

Referring to FIG. 4, the AP and the communication module perform normal initialization respectively upon startup, and then the AP sends an AT through a USB port to check whether a USB device is connected in the communication module. If not, it is shown that the AP and the module perform the scheme of binding a service to a UART, that is, the modem service is bound to the UART port, so the problem of dynamically switching the ports is not involved. If it is detected that a USB device is connected in the communication module, then an AT ^ SETPORT command is sent through the UART to inquire the port setting scheme to be performed from the communication module. Generally speaking, the communication module may have several configuration schemes, such as UART + GPIO, USB + GPIO, USB + UART + GPIO, etc. In FIG. 4, port setting scheme 2 to be performed is to bind a AT service to the UART port, and bind DIAG and modem services to the USB port. The communication module responds to the inquiry and notifies the AP of the port setting scheme to be performed, and then the communication module and the AP perform their respective port service configurations in the initialization phrase respectively according to the port setting scheme.

Hereafter, in normal system operation, the port service configurations can be dynamically switched according to actual requirements. In order for data not to be lost during the dynamic switching of the port service configurations, before the AP and the communication module bind the modem service to the UART port, data transmission of the AP or the communication module is required to be suspended and will recommence only after the modem service is bound to the UART port. The switching of ports may be divided into two kinds, active switching by a user and automatic switching by a system, which will be described respectively below.
(1) The user initiates the switching of the port service configurations actively. In the case that the electric quantity of the system is insufficient or the requirement for data transmission rate is not high (browsing web pages, checking emails or the net speed is limited by the network, etc.), the user can select to change the port service configuration actively according to monitoring of the electric quantity or monitoring of the net speed. Since this kind of port service configuration is initiated by the user actively and its priority is higher, only the user can recover the port service configuration to a state prior to switching. After the module binds the modem to the UART port, the AP and the module will shut down the USB to save the electric quantity. In this case, recovery of the switching can be controlled using the GPIO, and a pulse of 50ms is sent to notify the module to perform the switching of ports through the particular GPIO.
(2) The system automatically performs switching. Whether the switching of the port service configurations is performed is determined by counting data flow between the AP and the module in a period of time. The selection of this time value is related to a specific application, and its magnitude is minute. For detection of flow, there is much software or algorithm at the AP or the PC side, which is omitted here. If data quantity that the AP interacts with the module in the period of time is minor, using the UART to transmit the data can satisfies the requirement, and at this point switching of ports can be performed. Since the switching is preformed by the system automatically, if the modem totally shuts down the USB after switching to the UART, there will be some time delay upon recovery. Although power consumption can be reduced to a certain extent, unnecessary time cost will be caused when fluctuation of the data flow is great, therefore user experience becomes worse. Thus, the switching is performed only when the flow of the data quantity is small and uniform in a long period of time. Likewise, in this case switching can be controlled using the GPIO, and a pulse of 50ms is sent to notify the module to perform the switching of ports through the particular GPIO. It should be noted that since the enumeration of USB equipment at the AP side takes some time, the module is notified to switch port services only when the enumeration is completed and the AT (modem) port at the RIL layer is open. During this period, the data is still transmitted through the UART port.

On the other hand, in order to realize the port service configurations and switching of the port service configurations, two encapsulations are required to be made by software of the communication module in accordance with the present invention. One encapsulation is called as a serial port device administration layer (SM), which mainly encapsulates all bottom serial port devices of the module, such as UART, USB, SPI, etc. The SM layer, as a driver program layer, mainly realizes bottom communication and is an interface layer for transmitting data. Since the SM layer encapsulates the bottom devices, upper layer services can access to all serial ports conveniently. Another encapsulation is called as a service dynamic administration layer, which unifies all services that might be used (such as, data service, diag service, bt service or GPS service, etc.) into one service mapping table, and can associate the upper layer services with bottom driving and initialization of the port through modification of the mapping table. After a service is mapped dynamically to a particular serial port device and is registered, dynamic switching of the port services can be completed. All serial ports use the same buffer pool and record their usage situations through global variables to guarantee that data will not be lost during the switching of the ports.

The present invention reduces power consumption to a certain extent and improves user function experience. In addition, the present invention realizes dynamical switching of port services between a UART and a USB when electric quantity of the system is insufficient or less data quantity is transmitted, and recovers the port services at the appropriate time.

## Claims

1. A method for dynamically switching port service configurations between an application processor, AP, and a communication module comprises the following steps of:
A) after normal initialization, the AP and the communication module respectively performing port service configurations in an initialization phase (300);
B) after the port service configurations in the initialization phase are completed, starting monitoring of data flow between the AP and the communication module(301); and
C) the AP and the communication module respectively switching their respective current port service configurations to a port service configuration corresponding to the monitored data flow according to a result of the monitoring of the data flow(302); **characterized by**
D1) after the port service configurations in the initialization phase are completed, the communication module monitoring its electric quantity or data transmission rate; and
D2) when monitoring that the electric quantity or the data transmission rate is lower than a preset value, the communication module switching its port service configuration to a port service configuration with low power consumption, and notifying the AP to switch its port service configuration to the port service configuration with low power consumption.

2. The method according to claim 1, wherein the port service configuration means that a service is bound to a port; the switching of the port service configurations means that binding of the current service to the current port is changed to binding of the current service to another port.

3. The method according to claim 2, wherein the starting monitoring of the data flow between the AP and the communication module in step B) comprises the AP monitoring the data flow between the AP and the communication module by counting the data flow in a period of time.

4. The method according to claim 3, wherein the step C) specifically comprises: the AP comparing a value of the counted data flow with a threshold value, and when the value of the counted data flow is less than the threshold value, activating the AP and the communication module to bind their respective modems to their respective UART ports after relieving binding of their respective modem services to their respective USB ports respectively.

5. The method according to claim 4, wherein after the communication module and the AP bind the modem services to the UART ports, the method further comprises: the communication module and the AP shutting down their respective USB ports respectively.

6. The method according to claim 2, wherein the port service configuration in step D2) means that the modem services are bound to the USB ports; and the port service configuration with low power consumption means that the modem services are bound to the UART ports.

7. The method according to claim 1, wherein the step A) specifically comprises:
after normal initialization of the AP and the communication module, when the AP detects that a USB device is connected, the AP inquiring a port setting scheme to be performed from the communication module through a UART port;
the communication module responding to the inquiry, notifying the AP of the port setting scheme to be performed, and performing the port service configuration in the initialization phase of the communication module according to the port setting scheme to be performed; and
the AP performing the port service configuration in the initialization phase of the AP according to the port setting scheme to be performed, which is notified by the communication module.

8. An apparatus for dynamically switching port service configurations between an application processor, AP, and a communication module comprising:
an initialization port service configuration unit configured to perform the port service configurations in an initialization phase of the AP and the communication module after normal initialization of the AP and the communication module;
a data flow monitoring unit configured to monitor data flow between the AP and the communication module after the port service configurations in the initialization phase are completed; and
a port service configuration switching unit configured to switch the current port service configurations of the AP and the communication module to a port service configuration corresponding to the monitored data flow according to a result of the monitoring; **characterized by**:
an electric quantity/data transmission rate monitoring unit configured to monitor electric quantity or data transmission rate of the communication module after the port service configurations in the initialization phase are completed, and switch the port service configurations of the AP and the communication module to a port service configuration with low power consumption respectively when monitoring that the electric quantity or the data transmission rate is lower than a preset value.

## Patentansprüche

1. Verfahren zum dynamischen Schalten von Anschlussdienstkonfigurationen zwischen einem Anwendungsprozessor, AP, und einem Kommunikationsmodul, umfassend die folgenden Schritte:
A) nach einer normalen Initialisierung führen der AP bzw. das Kommunikationsmodul Anschlussdienstkonfigurationen in einer Initialisierungsphase (300) aus;
B) Starten einer Überwachung eines Datenflusses zwischen dem AP und dem Kommunikationsmodul (301) nachdem die Anschlussdienstkonfigurationen in der Initialisierungsphase abgeschlossen sind; und
C) der AP bzw. das Kommunikationsmodul schalten ihre jeweiligen Anschlussdienstkonfigurationen auf eine Anschlussdienstkonfiguration, welche dem überwachten Datenfluss entspricht, gemäß einem Ergebnis der Überwachung des Datenflusses (302); **gekennzeichnet durch**
D1) nachdem die Anschlussdienstkonfigurationen in der Initialisierungsphase abgeschlossen sind, überwacht das Kommunikationsmodul seine elektrische Größe oder Datenübertragungsrate; und
D2) wenn beobachtet wird, dass die elektrische Größe oder die Datenübertragungsrate geringer als ein voreingestellter Wert ist, schaltet das Kommunikationsmodul seine Anschlussdienstkonfiguration auf eine Anschlussdienstkonfiguration mit einem niedrigen Stromverbrauch und meldet dem AP, seine Anschlussdienstkonfiguration auf die Anschlussdienstkonfiguration mit niedrigem Stromverbrauch zu schalten.

2. Verfahren nach Anspruch 1, wobei die Anschlussdienstkonfiguration bedeutet, dass ein Dienst an einen Anschluss gebunden ist; wobei das Schalten der Anschlussdienstkonfigurationen bedeutet, dass eine Bindung des aktuellen Dienstes an den aktuellen Anschluss geändert wird, um den aktuellen Dienst an einen anderen Anschluss zu binden.

3. Verfahren nach Anspruch 2, wobei das Starten eines Überwachens des Datenflusses zwischen dem AP und dem Kommunikationsmodul in Schritt B) umfasst, dass der AP den Datenfluss zwischen dem AP und dem Kommunikationsmodul durch Zählen des Datenflusses in einer Zeitspanne überwacht.

4. Verfahren nach Anspruch 3, wobei der Schritt C) insbesondere umfasst: der AP vergleicht einen Wert des gezählten Datenflusses mit einem Schwellenwert und, wenn der Wert des gezählten Datenflusses kleiner als der Schwellenwert ist, werden der AP und das Kommunikationsmodul angeregt, ihre entsprechenden Modems an ihre entsprechenden UART-Anschlüsse zu binden, nachdem sie ein Binden ihrer entsprechenden Modem-Dienste mit ihren entsprechenden USB-Anschlüssen abgebaut haben.

5. Verfahren nach Anspruch 4, wobei, nachdem das Kommunikationsmodul und der AP die Modem-Dienste an die UART-Anschlüsse gebunden haben, das Verfahren ferner umfasst: das Kommunikationsmodul und der AP schalten ihre entsprechenden USB-Anschlüsse jeweils aus.

6. Verfahren nach Anspruch 2, wobei die Anschlussdienstkonfiguration im Schritt D2) bedeutet, dass die Modem-Dienste an die USB-Anschlüsse gebunden sind; und wobei die Anschlussdienstkonfiguration mit niedrigem Stromverbrauch bedeutet, dass die Modem-Dienste an die UART-Anschlüsse gebunden sind.

7. Verfahren nach Anspruch 1, wobei der Schritt A) insbesondere umfasst:
nach einer normalen Initialisierung des AP und des Kommunikationsmoduls fragt der AP ein Anschlusseinstellungsschema, welches von dem Kommunikationsmodul durch einen UART-Anschluss ausgeführt werden soll, ab, wenn der AP erfasst, dass eine USB-Vorrichtung verbunden ist;
das Kommunikationsmodul antwortet auf die Abfrage, meldet dem AP das auszuführende Anschlusseinstellungsschema und führt die Anschlussdienstkonfiguration in der Initialisierungsphase des Kommunikationsmoduls gemäß dem auszuführenden Anschlusseinstellungsschema durch; und
der AP führt die Anschlussdienstkonfiguration in der Initialisierungsphase des AP gemäß dem auszuführenden Anschlusseinstellungsschema, welches von dem Kommunikationsmodul gemeldet wurde, aus.

8. Vorrichtung zum dynamischen Schalten von Anschlussdienstkonfigurationen zwischen einem Anwendungsprozessor, AP, und einem Kommunikationsmodul, umfassend:
eine Anschlussdienstkonfigurationsinitialisierungseinheit, welche ausgestaltet ist, die Anschlussdienstkonfigurationen in einer Initialisierungsphase des AP und des Kommunikationsmoduls nach einer normalen Initialisierung des AP und des Kommunikationsmoduls auszuführen;
eine Datenflussüberwachungseinheit, welche ausgestaltet ist, einen Datenfluss zwischen dem AP und dem Kommunikationsmodul zu überwachen, nachdem die Anschlussdienstkonfigurationen in der Initialisierungsphase abgeschlossen sind; und
eine Anschlussdienstkonfigurationsschalteinheit, welche ausgestaltet ist, die aktuellen Anschlussdienstkonfigurationen des AP und des Kommunikationsmoduls auf eine Anschlussdienstkonfiguration zu schalten, welche dem überwachten Datenfluss gemäß einem Ergebnis der Überwachung entspricht; **gekennzeichnet durch** eine Überwachungseinheit für eine elektrische Größe / Datenübertragungsrate, welche ausgestaltet ist, eine elektrische Größe oder eine Datenübertragungsrate des Kommunikationsmoduls zu überwachen, nachdem die Anschlussdienstkonfigurationen in der Initialisierungsphase abgeschlossen sind, und die Anschlussdienstkonfigurationen des AP bzw. des Kommunikationsmoduls auf eine Anschlussdienstkonfiguration mit niedrigem Stromverbrauch zu schalten, wenn beobachtet wird, dass die elektrische Größe oder die Datenübertragungsrate kleiner als ein voreingestellter Wert ist.

## Revendications

1. Procédé de commutation dynamique de service d'un port entre un processeur AP d'applications et un module de communications, comportant les étapes de :
A) après une initialisation normale, réalisation, respectivement par l'AP et le module de communication, de configurations de service d'un port lors d'une phase d'initialisation (300) ;
B) une fois achevées les configurations de service d'un port lors de la phase d'initialisation, lancement d'un contrôle de débit de données entre l'AP et le module de communication (301) ; et
C) en fonction d'un résultat du contrôle du débit de données, commutation, respectivement par l'AP et le module de communication, de leurs configurations respectives de service d'un port pour passer à une configuration de service d'un port correspondant au débit de données contrôlé ; **caractérisé par**
D1) une fois achevées les configurations de service d'un port lors de la phase d'initialisation, un contrôle, par le module de communication, de sa consommation d'électricité ou de son débit de transmission de données ; et
D2) si la consommation d'électricité contrôlée ou le débit de transmission de données contrôlé est inférieur à une valeur préétablie, commutation, par le module de commutation, de sa configuration de service d'un port pour passer à une configuration de service d'un port à basse consommation d'électricité, et notification à l'AP pour qu'il fasse passer sa configuration de service d'un port à la configuration de service d'un port à basse consommation d'électricité.

2. Procédé selon la revendication 1, dans lequel la configuration de service d'un port signifie qu'un service est lié à un port ; la commutation des configurations de service d'un port signifie que la liaison du service en cours au port alors concerné passe à une liaison du service en cours à un autre port.

3. Procédé selon la revendication 2, dans lequel le lancement du contrôle du débit de données entre l'AP et le module de communication lors de l'étape B) comprend le contrôle, par l'AP, du débit de données entre l'AP et le module de communication en mesurant le débit de données pendant un laps de temps.

4. Procédé selon la revendication 3, dans lequel l'étape C) comprend spécifiquement : une comparaison, par l'AP, d'une valeur du débit de données compté avec une valeur seuil et, si la valeur du débit de données compté est inférieure à la valeur seuil, une activation de l'AP et du module de communication pour lier leurs modems respectifs à leurs ports UART respectifs après la suppression respective de la liaison de leurs services de modems respectifs à leurs ports USB respectifs.

5. Procédé selon la revendication 4, dans lequel, après que le module de communication et l'AP ont lié les services de modems aux ports UART, le procédé comporte en outre : la déconnexion respective, par le module de communication et l'AP, de leurs ports USB respectifs.

6. Procédé selon la revendication 2, dans lequel la configuration de service d'un port de l'étape D2) signifie que les services de modems sont liés aux ports USB ; et la configuration de service d'un port à basse consommation d'électricité signifie que les services de modems sont liés aux ports UART.

7. Procédé selon la revendication 1, dans lequel l'étape A) comprend spécifiquement :
après une initialisation normale de l'AP et du module de communication, si l'AP détecte qu'un dispositif USB est connecté, une demande, par l'AP, d'exécution d'une méthode de réglage de port depuis le module de communication via un port UART ;
une réponse du module de communication à la demande, indiquant à l'AP la méthode de réglage de port à exécuter, et une réalisation de la configuration de service de port lors de la phase d'initialisation du module de communication en fonction de la méthode de réglage de port à exécuter ; et
la réalisation, par l'AP, de la configuration de service de port lors de la phase d'initialisation en fonction de la méthode de réglage de port à exécuter, indiquée par le module de communication.

8. Dispositif de commutation dynamique de service d'un port entre un processeur AP d'applications et un module de communications, comportant :
une unité de configuration de service de port d'initialisation conçue pour réaliser les configurations de service d'un port lors d'une phase d'initialisation de l'AP et du module de communication après une initialisation normale de l'AP et du module de communication ;
une unité de contrôle de débit de données conçue pour contrôler le débit de données entre l'AP et le module de communication une fois achevées les configurations de service d'un port lors de la phase d'initialisation ; et
une unité de commutation de configuration de service d'un port, conçue pour commuter les configurations de service d'un port en cours de l'AP et du module de communication pour passer à une configuration de service d'un port correspondant au débit de données contrôlé, en fonction d'un résultat du contrôle ; **caractérisé par** :
une unité de contrôle de consommation d'électricité/de débit de transmission de données conçue pour contrôler la consommation d'électricité ou le débit de transmission de données du module de communication une fois achevées les configurations de service d'un port lors de la phase d'initialisation, et pour faire passer les configurations de service d'un port de l'AP et du module de communication à une configuration de service de port à basse consommation respectivement si le contrôle révèle que la consommation d'électricité ou le débit de transmission de données est inférieur à une valeur préétablie.
